# EUROPÄISCHE PATENTSCHRIFT

(11) **EP 1 396 667 B1**
(45) Veröffentlichungstag und Bekanntmachung des Hinweises auf die Patenterteilung: **10.05.2006**
(21) Anmeldenummer: 03014347.3
(22) Anmeldetag: 26.06.2003
(51) Int. Cl.: F16K 31/06, B60T 8/36, B60T 8/50

(54) **Magnetventil**
Solenoid valve
Electrovanne

(30) Priorität: 03.09.2002 DE 10240469
(43) Veröffentlichungstag der Anmeldung: 10.03.2004
(73) Patentinhaber: WABCO GmbH & CO. OHG, 30432 Hannover (DE)
(72) Erfinder: König, Heinz-Werner, 30890 Barsinghausen (DE); Kiel, Bernd, 31515 Wunstorf (DE); Müller, Thomas, 30177 Hannover (DE); Schappler, Hartmut, 30455 Hannover (DE)
(74) Vertreter: Schrödter, Manfred

(56) Entgegenhaltungen:
- EP-A- 0 250 738
- WO-A-95/02531
- US-A- 3 796 409
- US-A- 4 919 497

## Beschreibung

Die Erfindung betrifft ein Magnetventil gemäß Oberbegriff des Anspruchs 1, siehe dokument US- *A-*4,919, 497

Magnetventile dieser Art sind hinreichend bekannt. Sie haben sämtlich den Nachteil, dass sie sehr schnell ansprechen, wodurch eine Regelung kleiner Volumenströme des Mediums (Druckmittels) nur eingeschränkt möglich ist.

### Einschub zum Stand der Technik,

Aus der US-A-4,919,497 ist ein Magnetventil für den Einsatz in Bremsleitungen bekannt, welches für normale Bremsungen einen großen Durchmesser und für ABS-Bremsungen einen reduzierten Durchmesser aufweist. Als Ventilelement wird eine Kugel eingesetzt, wodurch bei der Ventilbetätigung durch das sogenannte hydrodynamische Paradox zusätzliche Ventilkräfte erzeugbar sind. Die Strömungsrichtung durch das bekannte Ventil ist so festgelegt, dass eine die Öffnungsbewegung unterstützende Kraft erzeugt wird.

Weiter ist aus der US-A-3,796,409 ein schnell schaltendes elektromagnetisch betätigbares Ventil für Flüssigkeiten oder Gase bekannt, bei welchem ein von einer Spule umgebenes Polelement und ein beweglicher, von einer Feder zurückgehaltener Anker hohl ausgebildet sind und von der zu schaltenden Flüssigkeit durchströmt werden. Eine Flussrichtung für die Flüssigkeit ist nicht angegeben. Der Anker weist ein koaxiales Ventilglied auf, welches von einem ringförmigen Träger, der vom zu schaltenden Fluid durchströmt wird, gehalten wird.

Die Aufgabe der vorliegenden Erfindung besteht deshalb darin, ein Magnetventil der eingangs genannten Art so auszubilden, dass Volumenströme eines Mediums, insbesondere eines Druckmittels, feinstufiger regelbar sind.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die erfindungsgemäße Aufgabenlösung sieht in einer axialen, vom Medium durchströmten Durchgangsbohrung des Ankers eine Blende bzw. Drossel vor. Diese Blende oder Drossel bewirkt, dass eine zusätzliche Kraft auf den Anker ausgeübt wird, die der Ventilöffnungsbewegung des Ankers entgegengerichtet ist und der Ventilschließbewegung des An-kers gleichgerichtet ist, und somit die Schließbewegung des Ankers unterstützt.

Grundsätzlich kann die Blende oder Drossel an beliebiger Stelle der Durchgangsbohrung des Ankers vorgesehen werden. Durch Veränderung der Position und der Größe des Strömungsquerschnitts der Blende oder Drossel kann die Größe der zusätzlich erzeugten Kraft eingestellt werden.

Durch die Erfindung können kleinere Volumenströme und somit kleinere Druckstufen ausgeregelt werden. Der Ansprechbereich des Magnetventils wird erweitert. Die Ansteuerzeit-Druckstufenkennlinie wird im Öffnungspunkt stark linearisiert.

Das erfindungsgemäße Magnetventil ist damit vorzüglich zur Steuerung pneumatischer oder hydraulischer Volumenströme geeignet. Es kann als Einlass- und Auslassventil sowie als stromlos offenes und stromlos geschlossenes 2/2-Ventil eingesetzt werden.

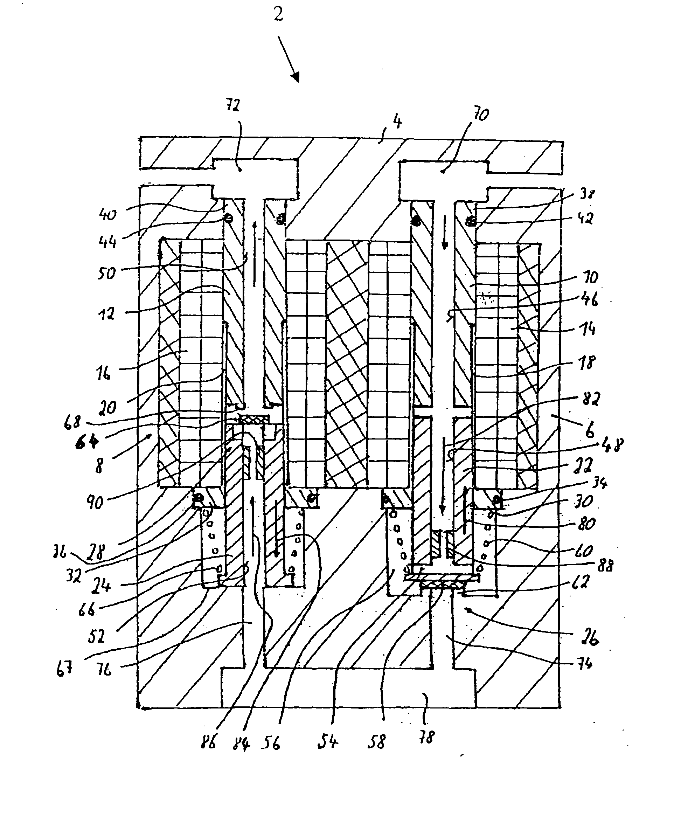

Die Erfindung soll nachfolgend anhand der beigefügten Zeichnung, die schematisch eine Magnetventileinrichtung mit zwei erfindungsgemäßen Magnetventilen zeigt, näher erläutert werden.

Die Zeichnung zeigt eine Magnetventileinrichtung 2 mit einem Gehäuse 4, in dem zwei Magnetventile 6, 8 angeordnet sind, welche eine Ventilanordnung aus zwei 2/2-Wegeventilen bilden, mit jeweils einer auf einen Spulenkern 10, 12 aufgewickelten Spule 14, 16 und jeweils einem in einem Ankerführungsrohr 18, 20 axial verschiebbaren Anker 22, 24. Die Anker 22, 24 schließen oder öffnen in Abhängigkeit von einer Bestromung der Spulen 14, 16 ein erstes Ventil 26, bspw. zur Belüftung, und ein zweites Ventil 28, bspw. zur Entlüftung.

Die Ankerführungsrohre 18, 20 sind fest mit den Spulenkernen 10, 12 verbunden und sind fest in den Spulen 14, 16 angeordnet. Die Ankerführungsrohre 18, 20 sitzen mit einem Teil 30, 32 abgedichtet, bspw. mittels O-Ringen 34, 36 im Gehäuse 4. Die Spulenkerne 10, 12 sitzen mit einem Teil 38, 40 abgedichtet, bspw. mittels O-Ringen 42 oder 44, im Gehäuse 4.

Der Spulenkern 10 und der Anker 22 des ersten Ventils 26 weisen miteinander in Verbindung stehende Durchgangsbohrungen 46, 48 auf. Der Spulenkern 12 und Anker 24 des zweiten Ventils 28 weisen miteinander in Verbindung stehende Durchgangsbohrungen 50, 52 auf.

Der Anker 22 des Magnetventils 6 weist an seinem dem Spulenkern 10 abgewandten Ende eine Querbohrung 54, die die Durchgangsbohrung 48 des Ankers 22 mit einer Ausgangskammer 56 verbindet, sowie einen Ventilkörper 58 auf, welcher mit einem gehäuseseitigen Ventilsitz 62 das Ventil 26 bildet und in der Grundstellung des Magnetventils 6, in der das Magnetventil 6 entstromt ist, durch eine Feder 60 gegen den Ventilsitz in Ventilschließstellung gedrückt wird. Die Feder 60 stützt sich einerseits am Teil 30 des Ankerführungsrohrs 18 bzw. am Gehäuse 4 und andererseits am Anker 22 ab. Der Ventilkörper 58 kann ein Elastomerteil sein.

Der Anker 24 des Magnetventils 8 ist an seinem dem Spulenkern 12 zugewandten Ende als Ventilkörper 64 ausgebildet, welcher mit einem am Spulenkern 12 ausgebildeten Ventilsitz 68 das Ventil 28 bildet. In der Grundstellung des Magnetventils 8, in der das Magnetventil entstromt und offen ist, wird der Anker 24 mit seinem dem Ventilkörper 64 gegenüberliegenden Ende durch eine Feder 66 gegen einen Anschlag 67 im Gehäuse 4 gedrückt. Die Feder 66 stützt sich einerseits am Teil 32 des Ankerführungsrohres 20 bzw. am Gehäuse 4 und andererseits am Anker 24 ab.

Im Gehäuse 4 sind eine Eintrittskammer 70 für ein Medium, bspw. Druckmittel (Druckluft) aus einer Druckmittelquelle, welche mit der Durchgangsbohrung 46 des Spulenkerns 10 des Ventils 26 in Verbindung steht, und eine als Entlüftungsanschluss wirkende Austrittskammer 72, welche mit der Durchgangsbohrung 50 des Spulenkerns 12 des Ventils 28 in Verbindung steht, ausgebildet. Die Durchgangsbohrungen 48 und 52 der Anker 22, 24 stehen über in dem Gehäuse 4 ausgebildete Kanäle 74, 76 mit einem Verbraucher, bspw. mit einem Steuerraum 78 eines Relaisventils (nicht dargestellt), in Verbindung.

Bei Bestromung des Magnetventils 6 wird dessen Anker 22 in Pfeilrichtung 80 gegen die Kraft der Feder 60 und entgegen der Medien- bzw. Druckmittelstromrichtung, siehe Pfeil 82, bewegt, wodurch das Ventil 26 öffnet und Medium (Druckmittel) in die Steuerkammer 78 strömen kann.

Bei Bestromung des Magnetventils 8 wird der Anker 24 des Magnetventils 8 in der Zeichnung nach oben gegen die Kraft der Feder 66 bewegt und wird der Ventilkörper 64 gegen den Ventilsitz 68 gedrückt, wodurch das Ventil 28 schließt.

Bei Entstromung des Magnetventils 8 wird dessen Anker 24 in Pfeilrichtung 84 durch die Kraft der Feder 66 und entgegen der Medien- bzw. Druckmittelströmungsrichtung, siehe Pfeil 86, bewegt, wodurch der Ventilkörper 64 vom Ventilsitz 68 wegbewegt, das Ventil 26 geöffnet und der Steuerraum 78 über die Austrittskammer 72 entlüftet wird.

Bei Verwendung der Magnetventileinrichtung 2 in einer Bremsanlage werden die Magnetventile 6 und 8 bei Einleitung einer Bremsung bestromt und bei Beendigung einer Bremsung entstromt.

In beiden Durchgangsbohrungen 48 und 52 der Anker 22, 24 sind Blenden bzw. Drosseln 88, 90 angeordnet, und zwar vorzugsweise - in der jeweiligen Medien- bzw. Druckmittelströmungsrichtung gesehen - im Bereich der Enden der Durchgangsbohrungen. Diese Blenden 88, 90 bewirken durch die Beaufschlagung mit Medium bzw. Druckmittel (Druckluft) die Erzeugung einer Kraft, die der Ventilöffnungsbewegung der Anker 22, 24 entgegengerichtet ist und somit die Schließbewegung der Anker unterstützt. Dies ermöglicht die Ausregelung kleinerer Medien- bzw. Druckmittelvolumenströme und kleinerer Druckstufen.

## Patentansprüche

1. Magnetventil zur Steuerung des Volumenstromes eines Mediums, insbesondere eines Druckmittels für Fahrzeugbremsanlagen, mit einem Gehäuse (4), in welchem eine Spule (14,16) auf einem Spulenkern (10,12) gewickelt und ein in einem Ankerführungsrohr (18,20) axial verschiebbarer Anker (22,24) angeordnet ist, welcher in Abhängigkeit von der Bestromung der Spule eine Ventileinrichtung (26, 28) schließt oder öffnet, die einen vom Anker betätigbaren Ventilkörper (58, 64) und einen Ventilsitz (62,68) umfasst, und mit einer den Anker bzw. Ventilkörper beaufschlagenden Feder, **dadurch gekennzeichnet, dass** der Spulenkern (10; 12) und der Anker (22; 24) axial miteinander in Verbindung stehende, vom Medium durchströmbare Durchgangsbohrungen (46, 48; 50, 52) aufweisen und in der Durchgangsbohrung (48, 52) des Ankers (22; 24) eine Blende bzw. Drossel (88; 90) angeordnet ist, wobei die Strömungsrichtung des Volumenstromes so ist, dass eine die Ventilschließbewegung des Ankers (22; 24) unterstützende Kraft auf den Anker (22;24) ausgeübt wird.

2. Magnetventil nach Anspruch 1, **dadurch gekennzeichnet, dass** die Blende oder Drossel (88; 90) in Strömungsrichtung des Mediums gesehen am Ende der Durchgangsbohrung (48; 52) angeordnet ist.

3. Magnetventil nach Anspruch 1, **dadurch gekennzeichnet, dass** die Position der Blende oder Drossel (88; 90) innerhalb der Durchgangsbohrung (48; 52) wählbar ist.

4. Magnetventil nach einem der Ansprüche 1-3, **dadurch gekennzeichnet, dass** der Anker (22) an seinem dem Spulenkern (10) abgewandten Ende einen Ventilkörper (58) aufweist, der mit einem gehäuseseitigen Ventilsitz (62) ein Ventil (26) bildet, das in der unbestromten, federvorgespannten Grundstellung geschlossen ist und bei Bestromung der Spule (14) geöffnet wird.

5. Magnetventil nach einem der Ansprüche 1-3, **dadurch gekennzeichnet, dass** der Anker (24) an seinem dem Spulenkern (12) zugewandten Ende einen Ventilkörper (64) aufweist, der mit einem am Spulenkern (12) ausgebildeten Ventilsitz (68) ein Ventil (28) bildet, das in der unbestromten, federvorgespannten Grundstellung geöffnet ist und bei Bestromung der Spule (16) geschlossen wird.

6. Magnetventilanordnung, **dadurch gekennzeichnet, dass** zwei Magnetventile (6, 8) nach einem der vorhergehenden Ansprüche zu einer aus zwei 2/2-Wegeventilen bestehende Ventilanordnung kombiniert sind, derart, dass
das eine Magnetventil (6) in der nicht bestromten Grundstellung geschlossen ist, wobei die Durchgangsbohrung (46) des Spulenkerns (10) dieses Magnetventils (6) mit einer Druckmittelquelle und die mit der Durchgangsbohrung (46) des Spulenkerns (10) in Verbindung stehende Durchgangsbohrung (48) des Ankers (22) über das Ventil (26) mit einem Verbraucher in Verbindung steht und der Anker (22) bei Bestromung der Spule (14) das Ventil (26) öffnet zur Aussteuerung von Druckmittel an den Verbraucher, und
das andere Magnetventil (8) in der nicht bestromten Grundstellung geöffnet ist, wobei die Durchgangsbohrung (50) des Spulenkerns (12) dieses Magnetventils (8) mit einer als Entlüftungsanschluss wirkenden Austrittskammer (72) in Verbindung steht und die mit der Durchgangsbohrung (50) des Spulenkerns (12) über das Ventil (28) in Verbindung stehende Durchgangsbohrung (52) des Ankers (24) mit dem Verbraucher in Verbindung steht und der Anker (24) bei Bestromung der Spule (16) das Ventil (28) schließt.

## Claims

1. A solenoid valve for controlling the volumetric flow of a medium, especially a pressure medium for vehicle brake systems, having a housing (4), in which a coil (14, 16) is wound on a coil core (10, 12) and an armature (22, 24) is arranged in an armature guide tube (18, 20) so as to be axially displaceable, which armature, as a function of current supply to the coil, closes or opens a valve arrangement (26, 28) which comprises a valve member (58, 64) operable by the armature and a valve seat (62, 68), and having a spring acting upon the armature and the valve member respectively, **characterised in that** the coil core (10; 12) and the armature (22; 24) have through-bores (46, 48; 50, 52) that are in communication axially with one another and through which medium flows, and a restrictor or throttle (88; 90) is arranged in the through-bore (48; 52) of the armature (22; 24), the direction of flow of the volumetric flow being such that a force assisting the valve closure movement of the armature (22; 24) is exerted on the armature (22; 24).

2. A solenoid valve according to claim 1, **characterised in that**, viewed in the direction of flow of the medium, the restrictor of throttle (88; 90) is arranged at the end of the through-bore (48; 52).

3. A solenoid valve according to claim 1, **characterised in that** the position of the restrictor or throttle (88; 90) within the through-bore (48; 52) is able to be selected.

4. A solenoid valve according to any one of claims 1 to 3, **characterised in that**, at its end remote from the coil core (10), the armature (22) has a valve member (58) which, together with a valve seat (62) integral with the housing, forms a valve (26), which in the zero-current, spring-biased normal position is closed and is opened when the coil (14) is supplied with current.

5. A solenoid valve according to any one of claims 1 to 3, **characterised in that** at its end facing the coil core (12) the armature (24) has a valve member (64) which, together with a valve seat (68) formed on the coil core (12), forms a valve (28), which in the zero-current, spring-biased normal position is open and is closed when the coil (16) is supplied with current.

6. A solenoid valve arrangement, **characterised in that** two solenoid valves (6, 8) according to any one of the preceding claims are combined to form a valve arrangement comprising two 2/2-way valves, such that
the one solenoid valve (6) is closed in the zero-current normal position, wherein the through-bore (46) of the coil core (10) of this solenoid valve (6) is connected to a pressure medium source and the through-bore (48) of the armature (22) connected to the through-bore (46) of the coil core (10) is connected via the valve (26) to a load, and the armature (22), when the coil (14) is supplied with current, opens the valve (26) for controlling pressure medium to the load, and
the other solenoid valve (8) is open in the zero-current normal position, wherein the through-bore (50) of the coil core (12) of this solenoid valve (8) is connected to an outlet chamber (72) acting as air evacuation connection and the through-bore (52) of the armature (24) connected via the valve (28) to the through-bore (50) of the coil core (12) is connected to the load, and the armature (24), when the coil (16) is supplied with current, closes the valve (28).

## Revendications

1. Electrovanne pour la régulation du débit volumique d'un fluide, en particulier d'un agent de pression pour des installations de freinage de véhicule, comportant un boîtier (4) dans lequel une bobine (14, 16) est enroulée sur un noyau de bobine (10, 12) et dans lequel est disposé un induit (22, 24) déplaçable, dans le sens axial, dans un tube de guidage d'induit (18, 20), lequel induit ferme et ouvre, en fonction de l'alimentation en courant de la bobine, un dispositif à vannes (26, 28) qui comporte un élément de vanne (58, 64) pouvant être actionné par l'induit et un siège de vanne (62, 68) et comportant un ressort appliquant une pression sur l'induit ou l'élément de vanne, **caractérisée en ce que** le noyau de bobine (10, 12) et l'induit (22, 24) comportent des trous débouchants (46, 48 ; 50, 52), en liaison les uns avec les autres dans le sens axial, pouvant être traversés par un fluide et **en ce que**, dans le trou débouchant (48, 52) de l'induit (22, 24) est disposé un diaphragme ou un papillon (88, 90), le sens d'écoulement du débit volumique étant tel qu'une force soutenant le mouvement de fermeture de la vanne de l'induit (22 ; 24) est exercée sur l'induit (22, 24).

2. Electrovanne selon la revendication 1, **caractérisée en ce que** le diaphragme ou le papillon (88, 90) sont disposés, vus dans le sens d'écoulement du fluide, à l'extrémité du trou débouchant (48, 52).

3. Electrovanne selon la revendication 1, **caractérisée en ce que** la position du diaphragme ou du papillon (88 ; 90) peut être sélectionnée à l'intérieur du trou débouchant (48 ; 52).

4. Electrovanne selon l'une quelconque des revendications 1 à 3, **caractérisée en ce que** l'induit (22) comporte, sur son extrémité détournée du noyau de bobine (10), un élément de vanne (58) qui forme une vanne (26) avec un siège de vanne côté boîtier (62), vanne qui est fermée dans la position initiale précontrainte par ressort, non alimentée en courant, et est ouverte lors de l'alimentation en courant de la bobine (14) .

5. Electrovanne selon l'une quelconque des revendications 1 à 3, **caractérisée en ce que** l'induit (24) comporte, sur son extrémité tournée vers le noyau de bobine (12), un élément de vanne (64) qui forme une vanne (28) avec un siège de vanne (68), réalisé sur le noyau de bobine (12), vanne qui est ouverte dans la position initiale précontrainte par ressort, non alimentée en courant, et est fermée lors de l'alimentation en courant de la bobine (16).

6. Dispositif à électrovannes, **caractérisé en ce que** deux électrovannes (6, 8) selon l'une quelconque des revendications précédentes sont combinées pour former un dispositif à vannes composé de deux distributeurs 2/2, de telle sorte que
l'électrovanne (6) soit fermée dans la position initiale non alimentée en courant, le trou débouchant (46) du noyau de bobine (10) de cette électrovanne (6) avec une source d'agent de pression et le trou débouchant (48), de l'induit (22), en liaison avec le trou débouchant (46) du noyau de bobine (10), étant relié à un consommateur par le biais de la vanne (26) et l'induit (22) ouvrant la vanne (26) lors de l'alimentation en courant de la bobine (14) pour l'envoi d'agent de pression vers le consommateur et
l'autre électrovanne (8) est ouverte dans la position initiale non alimentée en courant, le trou débouchant (50) du noyau de bobine (12) de cette électrovanne (8) étant relié à une chambre de sortie (72) servant de raccord pour la purge et le trou débouchant (52), de l'induit (24), en liaison avec le trou débouchant (50) du noyau de bobine (12) par le biais de la vanne (28), étant relié au consommateur et l'induit (24) fermant la vanne (28) lors de l'alimentation en courant de la bobine (16).
